# EUROPÄISCHE PATENTSCHRIFT

(11) **EP 3 023 758 B1**
(45) Veröffentlichungstag und Bekanntmachung des Hinweises auf die Patenterteilung: **24.01.2018**
(21) Anmeldenummer: 15190151.9
(22) Anmeldetag: 16.10.2015
(51) Int. Cl.: G01L 9/00, G01L 19/14, F02M 57/00

(54) **KRAFTSTOFFINJEKTOR**
FUEL INJECTOR
INJECTEUR DE CARBURANT

(30) Priorität: 20.11.2014 DE 102014223659
(43) Veröffentlichungstag der Anmeldung: 25.05.2016
(73) Patentinhaber: ROBERT BOSCH GMBH, 70442 Stuttgart (DE)
(72) Erfinder: Melcher, Reinhold, 91077 Neunkirchen A. Brand (DE); Cromme, Peter, 96050 Bamberg (DE); Rapp, Holger, 71254 Ditzingen (DE); Forke, Martin, 70499 Stuttgart (DE)

(56) Entgegenhaltungen:
- EP-A1- 1 335 195
- EP-A1- 2 463 636
- EP-A2- 2 034 288
- DE-A1- 10 238 084
- DE-A1-102005 053 683
- DE-A1-102012 102 634
- US-A1- 2002 029 639

## Beschreibung

### Stand der Technik

Die Erfindung betrifft einen Kraftstoffinjektor, insbesondere einen Common-Rail-Injektor, nach dem Oberbegriff des Anspruchs 1.

Ein Kraftstoffinjektor nach dem Oberbegriff des Anspruchs 1 ist aus der nachveröffentlichten DE 10 2014 209 330 A1 der Anmelderin bekannt. Bei dem bekannten Kraftstoffinjektor wird insbesondere zur Erkennung des Zeitpunkts des Schließens der Düsennadel, bei dem diese auf ihren Sitz im Injektorgehäuse auftrifft und dadurch im Injektorgehäuse ausgebildete Einspritzöffnung zumindest mittelbar verschließt, eine Messeinrichtung mit einem Sensorelement verwendet, das im Bereich einer Versorgungsbohrung am Injektorgehäuse angeordnet ist. Die Versorgungsbohrung versorgt einen Hochdruckraum, in dem auch die Düsennadel angeordnet ist, mit unter Hochdruck stehendem Kraftstoff. Insbesondere weist das Injektorgehäuse im Bereich der Messeinrichtung einen Verformungsbereich auf, der in Abhängigkeit des Kraftstoffdrucks in der Versorgungsbohrung elastisch deformierbar ausgebildet ist. Bei einer Druckerhöhung in der Versorgungsbohrung wölbt sich der Verformungsbereich nach außen hin, was mittels des Sensorelements detektierbar ist. Das Sensorelement ist mittels einer Klebeverbindung mit dem Verformungsbereich verbunden und dazu ausgebildet, in dem Kontaktbereich zum Injektorgehäuse auftretende Dehnungen bzw. Zugspannungen zu erfassen, wobei die Größe bzw. Höhe der Dehnungen in Abhängigkeit von dem Druck in der Versorgungsbohrung ist. Charakteristisch beim angesprochenen Verschließen der Einspritzöffnungen durch die Düsennadel ist es, dass dadurch ein (relativ starker bzw. schneller) Druckanstieg in der Versorgungsleitung stattfindet, da kein Kraftstoff mehr über die Einspritzöffnungen abgegeben wird, wobei der Druckanstieg mittels des Sensorelements erfasst wird.

Aus der DE 10 2012 102 634 A1 ist ebenfalls ein Kraftstoffinjektor mit einem Sensorelement bekannt. Weiterhin ist in der DE 102 38 084 A1 ein Verfahren zur Befestigung einer Sensorvorrichtung auf einem Trägermaterial beschrieben.

Bei einer stoffschlüssigen Verbindung, bei der diese wie beim eingangs genannten Stand der Technik über die gesamte Fläche des Sensorelements ausgebildet ist, hat es sich herausgestellt, dass es infolge einer inhomogenen Dehnungsverteilung im Sensorelement zu einer hohen Belastung des Sensorelements und somit zu einer Verringerung dessen Lebensdauer kommen kann. Darüber hinaus ist als nachteilhaft anzusehen, dass aufgrund der inhomogenen Dehnungsverteilung Bereiche geringerer Dehnung am Rand der Kontaktfläche des Sensorelements mit dem Verformungsbereich entstehen, die die Dehnung des Sensorelements im mittigen Bereich maximaler Dehnung hemmen und so die mögliche Signalstärke, welche ansonsten aufgrund der maximalen Dehnung möglich wäre, verringert.

### Offenbarung der Erfindung

Ausgehend von dem dargestellten Stand der Technik liegt der Erfindung die Aufgabe zugrunde, einen Kraftstoffinjektor nach dem Oberbegriff des Anspruchs 1, bei dem die Verbindung zwischen dem Sensorelement und dem Verformungsbereich über eine stoffschlüssige Verbindung erfolgt, derart weiterzubilden, dass verbesserte funktionelle Eigenschaften bzw. eine erhöhte Lebensdauer des Sensorelements erzielt wird.

Diese Aufgabe wird erfindungsgemäß bei einem Kraftstoffinjektor, insbesondere einem Common-Rail-Injektor, mit den kennzeichnenden Merkmalen des Anspruchs 1 dadurch gelöst, dass die stoffschlüssige Verbindung zwischen dem Sensorelement und dem Verformungsbereich lediglich in einem Teilbereich zwischen dem Verformungsbereich und der dem Verformungsbereich zugewandten Fläche des Sensorelements ausgebildet ist. Damit lassen sich in überraschender Art und Weise, je nach Anordnung der stoffschlüssigen Verbindung, die funktionellen Eigenschaften des Sensorelements hinsichtlich seiner Signalstärke bzw. seiner Lebensdauer vorteilhaft beeinflussen.

Vorteilhafte Weiterbildungen des erfindungsgemäßen Kraftstoffinjektors sind in den Unteransprüchen angeführt.

In einer ersten konstruktiven Ausgestaltung des Erfindungsgedankens ist es vorgesehen, dass der Teilbereich eine Zone umfasst, in der bei einer Verformung des Verformungsbereichs in dem Sensorelement die größten Spannungen auftreten. Mit anderen Worten gesagt bedeutet dies, dass das Sensorelement in den Bereichen bzw. den Zonen, in denen relativ geringe Dehnungen bzw. Spannungen auftreten, nicht mit dem Verformungsbereich über die stoffschlüssige Verbindung verbunden ist. Dadurch wird der Vorteil erzielt, dass die maximale Dehnung des Verformungsbereichs auf das Sensorelement übertragbar ist und somit von dem Sensorelement, welches insbesondere als Piezoelement ausgebildet ist, ein maximal mögliches Signal abgegeben werden kann.

In grundsätzlich davon abweichender konstruktiver Ausgestaltung kann es jedoch auch vorgesehen sein, dass der Teilbereich wenigstens zwei Zonen umfasst, die beidseitig wenigstens einer Zone des Sensorelements angeordnet sind, in der bei einer Verformung des Verformungsbereichs in dem Sensorelement größere Spannungen auftreten als in dem Teilbereich. Bei dieser Ausführungsform der Erfindung ist es im Gegensatz zu der zuerst genannten Ausführungsform vorgesehen, dass das Sensorelement in den Zonen bzw. Bereichen mit dem Verformungsbereich verbunden ist, in denen relativ geringere Dehnungen bzw. Spannungen auftreten. Dadurch wird der Vorteil erzielt, dass die Dehnungen bzw. Spannungen zwischen den Kontaktstellen, an denen das Sensorelement mit dem Verformungsbereich verbunden ist, sich bei gleichem Mittelwert und gleichem Signal homogen verteilen und damit wesentlich kleinere maximale Dehnungen entstehen. Dies bewirkt wiederum eine Erhöhung der Lebensdauer des Sensorelements, da dieses mechanisch nicht so stark belastet wird.

Unabhängig von den beiden oben angesprochenen konstruktiven Ausgestaltungen ist es bevorzugt vorgesehen, dass der Teilbereich zumindest im Wesentlichen streifenförmig ausgebildet ist. Eine derartige streifenförmige Ausbildung des Teilbereichs, über den das Sensorelement mit dem Verformungsbereich verbunden ist, ermöglicht eine relativ große Verbindungsfläche zwischen dem Sensorelement und dem Verformungsbereich und somit eine relativ geringe mechanische Belastung bzw. Beanspruchung der stoffschlüssigen Verbindung.

Wie bereits erwähnt, ist es besonders bevorzugt vorgesehen, dass das Sensorelement als Piezoelement ausgebildet ist.

Darüber hinaus ist es zur Verbesserung der stoffschlüssigen Verbindung insbesondere vorgesehen, dass das Sensorelement auf der dem Verformungsbereich zugewandten Seite und der Verformungsbereich zumindest in dem Teilbereich eben ausgebildet sind.

Als stoffschlüssige Verbindungen kommen grundsätzlich unterschiedlichste Verbindungstechniken wie Löt-, Schweiß- oder Klebeverbindungen in Frage. Besonders bevorzugt ist die Verwendung einer Klebeverbindung als stoffschlüssige Verbindung, da bei dieser Verbindungsart im Gegensatz zu den angesprochenen anderen Verbindungstechniken die thermische Belastung insbesondere des Sensorelements relativ gering ist.

Zur genauen Definition der Kontaktflächen zwischen dem Sensorelement und dem Verformungsbereich kann es in vorteilhafter Weise vorgesehen sein, dass im Überdeckungsbereich zwischen dem Sensorelement und dem Verformungsbereich der Verformungsbereich wenigstens eine Erhebung und/oder wenigstens eine Ausnehmung bzw. Vertiefung aufweist, und dass die stoffschlüssige Verbindung im Bereich der wenigstens einen Erhöhung und/oder außerhalb der wenigstens einen Ausnehmung ausgebildet ist. Dadurch ist sichergestellt, dass im Bereich der wenigstens einen Vertiefung keine Verbindung bzw. Ankopplung des Sensorelements an den Verformungsbereich erfolgt.

Besonders bevorzugt ist darüber hinaus eine Anordnung des Verformungsbereichs im Bereich der Versorgungsbohrung oder eines mit der Versorgungsbohrung in Wirkverbindung angeordneten Abzweigs. Beide Anordnungen haben den Vorteil, dass sie eine relativ brennraumferne Anordnung des Sensorelements bzw. der Messeinrichtung ermöglichen, so dass die dort während des Betriebs auftretenden Temperaturen, gegenüber einem brennraumnahen Anbauort, reduziert sind. Darüber hinaus ist es bei Verwendung eines Abzweigs, der mit der Versorgungsbohrung in Wirkverbindung angeordnet ist, möglich, das Sensorelement in Umfangsrichtung des Kraftstoffinjektors betrachtet an nahezu jeden beliebigen Ort anzuordnen, um damit ggf. der Einbausituation des Kraftstoffinjektors in der Brennkraftmaschine berücksichtigen zu können.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte, teilweise geschnittene Seitenansicht eines erfindungsgemäßen Kraftstoffinjektors,
- Fig. 2: eine Darstellung der Verteilung der Oberflächendehnung im Bereich eines als Piezoelement ausgebildeten Sensorelements bei einer Druckbeanspruchung eines Verformungsbereichs, wie es bei dem Kraftstoffinjektor gemäß Fig. 1 verwendet wird,
- Fig. 3: eine erste erfindungsgemäße Anordnung eines Sensorelements in Draufsicht,
- Fig. 4: einen Schnitt in der Ebene IV-IV der Fig. 3,
- Fig. 5: einen Schnitt in der Ebene V-V der Fig. 3,
- Fig. 6: eine zweite erfindungsgemäße Anordnung eines Sensorelements in teilweise geschnittener Draufsicht,
- Fig. 7: einen Schnitt in der Ebene VII-VII der Fig. 6,
- Fig. 8: eine gegenüber der Anordnung der Fig. 6 modifizierte Anordnung in teilweise geschnittener Draufsicht und
- Fig. 9: einen Schnitt in der Ebene IX-IX der Fig. 8.

Gleiche Elemente bzw. Elemente mit gleicher Funktion sind in den Figuren mit den gleichen Bezugsziffern versehen.

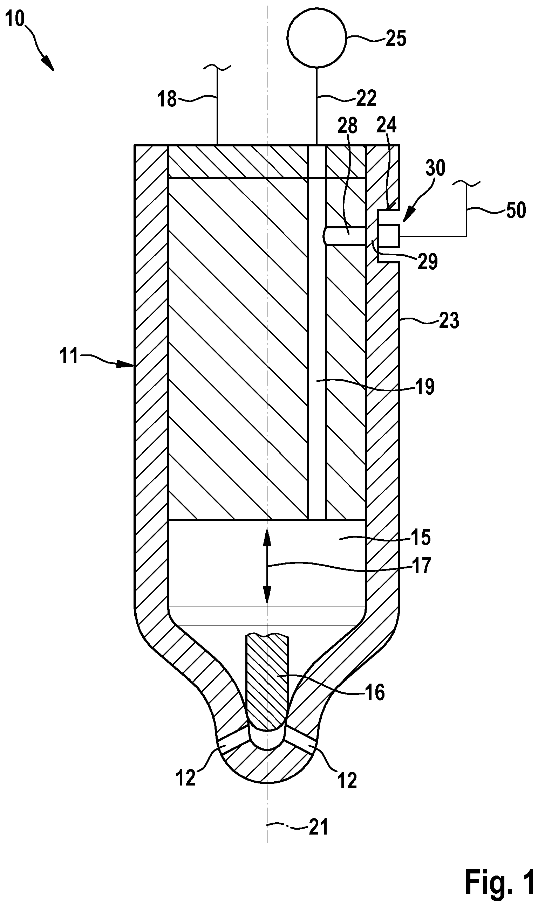

Der in der Fig. 1 stark vereinfacht dargestellte Kraftstoffinjektor 10 ist als sogenannter Common-Rail-Injektor ausgebildet, und dient dem Einspritzen von Kraftstoff in den nicht gezeigten Brennraum einer Brennkraftmaschine, insbesondere einer selbstzündenden Brennkraftmaschine.

Der Kraftstoffinjektor 10 weist ein im Wesentlichen aus Metall bestehendes, ggf. mehrteilig ausgebildetes Injektorgehäuse 11 auf, in dem auf der dem Brennraum der Brennkraftmaschine zugewandten Seite wenigstens eine, vorzugsweise mehrere Einspritzöffnungen 12 zum Einspritzen des Kraftstoffs eingeordnet sind. Innerhalb des Injektorgehäuses 11 bildet dieses einen Hochruckraum 15 aus, in dem eine als Einspritzglied dienende Düsennadel 16 in Richtung des Doppelpfeils 17 hubbeweglich angeordnet ist. In der dargestellten, abgesenkten Stellung der Düsennadel 16 bildet diese zusammen mit der Innenwand des Hochdruckraums 15 bzw. des Injektorgehäuses 11 einen Dichtsitz aus, so dass die Einspritzöffnungen 12 zumindest mittelbar verschlossen sind, derart, dass das Einspritzen von Kraftstoff aus dem Hochdruckraum 15 in den Brennraum der Brennkraftmaschine vermieden wird. In der anderen, nicht dargestellten, von dem Dichtsitz abgehobenen Position der Düsennadel 16 gibt diese die Einspritzöffnungen 12 zum Einspritzen des Kraftstoffs in den Brennraum der Brennkraftmaschine frei. Die Bewegung der Düsennadel 16, insbesondere zum Freigeben der Einspritzöffnungen 12, erfolgt auf eine an sich bekannte Art und Weise mittels eines nicht dargestellten Aktuators, der über eine Spannungsversorgungsleitung 18 von einer Steuereinrichtung der Brennkraftmaschine ansteuerbar ist. Bei dem Aktuator kann es sich insbesondere um einen Magnetaktuator oder aber um einen Piezoaktuator handeln.

Die Versorgung des Hochdruckraums 15 mit unter Hochdruck (Systemdruck) stehendem Kraftstoff erfolgt über eine innerhalb des Injektorgehäuses 11 angeordnete bzw. in Bauteilen des Kraftstoffinjektors 10 ausgebildete Versorgungsbohrung 19, die insbesondere exzentrisch zur Längsachse 21 des Injektorgehäuses 11 in einem Randbereich des Kraftstoffinjektors 10, zumindest im Wesentlichen parallel zur Längsachse 21, verläuft. Die Versorgungsbohrung 19 ist darüber hinaus über einen nicht dargestellten Kraftstoffanschlussstutzen mit einer Kraftstoffleitung 22 verbunden, welche wiederum mit einem Kraftstoffspeicher 25 (Rail) gekoppelt ist.

In einem von den Einspritzöffnungen 12 bzw. dem Brennraum axial relativ weit beabstandeten Bereich des Injektorgehäuses 11 ist in dessen Außenwand 23 beispielhaft eine sacklochförmige Vertiefung 24 ausgebildet, so dass die Wanddicke des Injektorgehäuses 11 im Bereich der Vertiefung 24 reduziert ist. Ergänzend wird erwähnt, dass anstelle einer sacklochförmigen Vertiefung 24 das Injektorgehäuse 11 auch eine Abflachung aufweisen kann, in deren Bereich die Wanddicke des Injektorgehäuses 11 reduziert ist.

Der eben ausgebildete Grund 26 der Vertiefung 24 bildet einen Teil eines Verformungsbereichs 27 aus. Auf der der Vertiefung 24 abgewandten Seite des Injektorgehäuses 11 ist das Injektorgehäuse 11 beispielhaft in Wirkverbindung mit einem Abzweig 28 angeordnet, der wiederum in der Versorgungsbohrung 19 mündet. Dadurch wirkt der in der Versorgungsbohrung 19 augenblicklich herrschende Kraftstoffdruck auch in dem Injektorgehäuse 11 auf der der Vertiefung 24 abgewandten Seite. Dadurch, dass die Wanddicke des Injektorgehäuses 11 im Bereich der Vertiefung 24 reduziert ist, wirkt der Wandabschnitt 29 des Injektorgehäuses 11 auf der der Vertiefung 24 zugewandten Seite als Verformungsbereich 27 in Art einer elastisch verformbaren Membran, wobei die Verformung, welche sich als Wölbung ausbildet, umso größer ist, je höher der augenblickliche Kraftstoffdruck in der Versorgungsbohrung 19 bzw. dem Abzweig 28 ist.

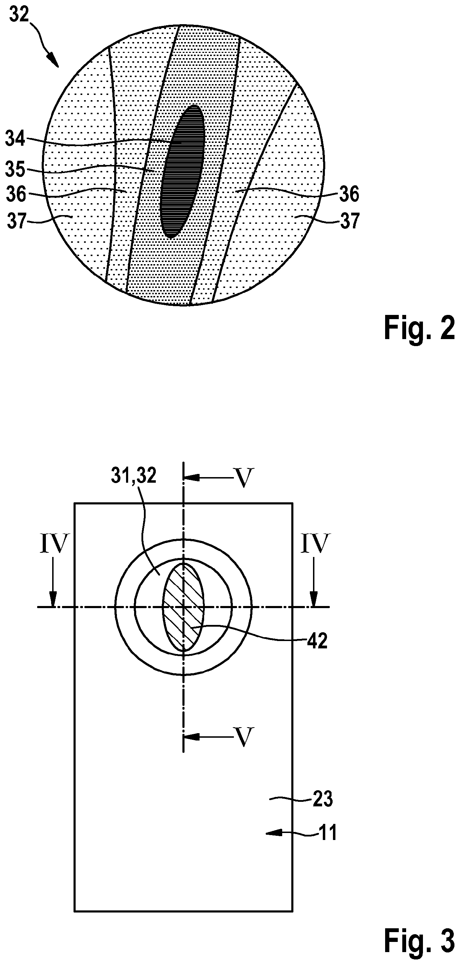

Zur Detektion des zeitlichen Verlaufs des Kraftstoffdrucks in dem Abzweig 28 bzw. der Versorgungsbohrung 19 und damit auch in dem Hochdruckraum 15, welcher als Indiz für die augenblickliche Stellung der Düsennadel 16 zur Ansteuerung der Düsennadel 16 verwendet wird, weist der Kraftstoffinjektor 10 eine Messeinrichtung 30 auf. Die Messeinrichtung 30 weist insbesondere ein als Piezoelement 31 ausgebildetes Sensorelement 32 (Fig. 3 bis 5) auf, das auf der dem Verformungsbereich 27 zugewandten Seite eben ausgebildet ist.

Bei einer Erhöhung des Kraftstoffdrucks in der Versorgungsbohrung 19 bzw. dem Abzweig 28 kommt es zu einer insbesondere sphärischen Verformung des Verformungsbereichs 27 im Bereich des Sensorelements 32. Die bei einer Kopplung des Sensorelements 32 mit dem Verformungsbereich 27 in dem Sensorelement 32 dabei erzeugten Zugspannungen bzw. Dehnungen sind beispielhaft in der Fig. 2 dargestellt. Insbesondere erkennt man in einem mittleren, zentralen Bereich des Sensorelements 32 eine ovale erste Zone 34, in der die höchsten Zugspannungen bzw. Dehnungen auftreten. Die erste Zone 34 ist von einer länglichen, über den gesamten Durchmesser des Sensorelements 32 verlaufende zweite Zone 35 umgeben, in der gegenüber der ersten Zone 34 verringerte Dehnungen bzw. Zugspannungen auftreten. Die zweite Zone 35 ist wiederum von zwei streifenförmigen Zonen 36 umgeben, in der gegenüber der zweiten Zone 35 nochmals verringerte Dehnungen bzw. Zugspannungen auftreten. Die dritten Zonen 36 sind wiederum beidseitig von zwei vierten Zonen 37 umgeben, in denen die geringsten Dehnungen bzw. Zugspannungen auftreten. Die Ausrichtung bzw. Orientierung der Zonen 34 bis 37 erfolgt in Abhängigkeit der Orientierung bzw. Anordnung des Piezoelements 31 auf dem Verformungsbereich 27.

Die Verbindung zwischen dem Sensorelement 32 und dem Verformungsbereich 27 erfolgt durch eine stoffschlüssige Verbindung 38, insbesondere durch eine Klebeverbindung 39.

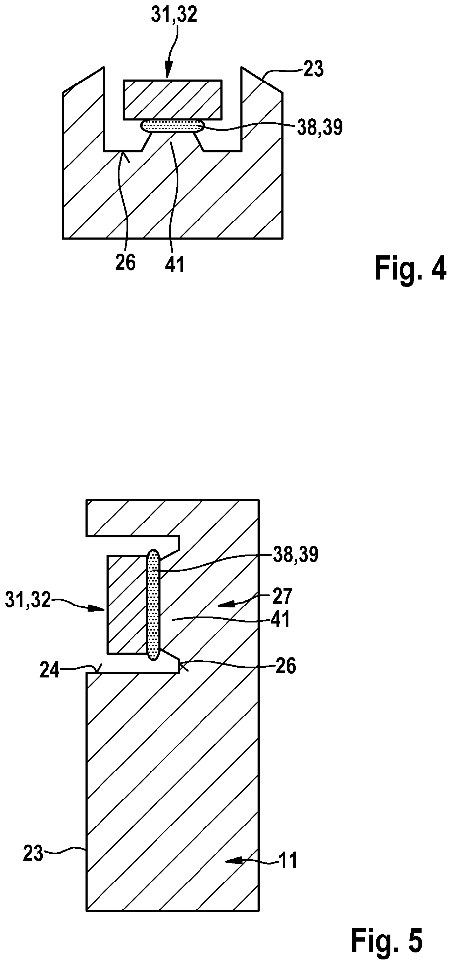

Bei der in den Fig. 3 bis 5 dargestellten ersten Ausführungsform der Erfindung ist es vorgesehen, dass am Grund 26 der Vertiefung 24 eine ebene, streifenförmige Erhebung 41 als Teilbereich des Grund 26 ausgebildet ist, wobei die in der Fig. 3 erkennbare Grundfläche 42 der Erhebung 41 bevorzugt in Anlehnung der beiden Zonen 34, 35 entsprechend der Fig. 2 ausgebildet ist, d.h., dass die Erhebung 41 in Überdeckung mit den Bereichen des Sensorelements 32 angeordnet ist, in denen die höchsten Dehnungen bzw. Zugspannungen auftreten. Ferner erkennt man in den Fig. 4 und 5 auch die Klebeverbindung 39, die ausschließlich im Bereich der Erhebung 41 erfolgt.

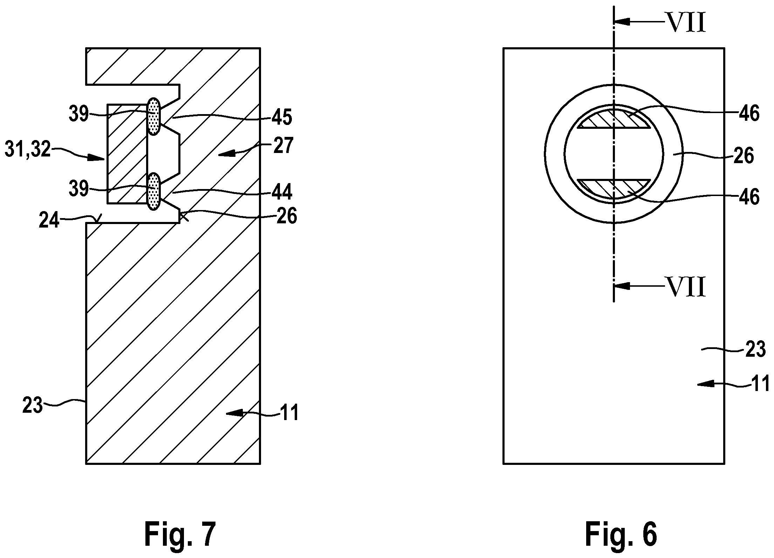

Bei der in den Fig. 6 und 7 dargestellten zweiten erfindungsgemäßen Anordnung ist es demgegenüber vorgesehen, dass vom Grund 26 der Vertiefung 24 zwei, in etwa streifenförmige, ebene Erhebungen 44, 45 ausgehen, deren in der Fig. 6 erkennbare Grundflächen 46 als Teilbereich des Grunds 26 in Analogie und in Überdeckung mit den vierten Zonen 37 entsprechend der Darstellung der Fig. 2 ausgebildet sind, in denen die geringsten Dehnungen bzw. Zugspannungen in dem Sensorelement 32 auftreten. Die Verbindung zwischen dem Sensorelement 32 und den Erhebungen 44, 45 über die beiden Klebeverbindung 39 stellt sicher, dass in dem (mittleren) Bereich des Sensorelements 32, in denen die höchsten Dehnungen bzw. Zugspannungen auftreten, das Sensorelement 32 von dem Verformungsbereich 37 entkoppelt ist.

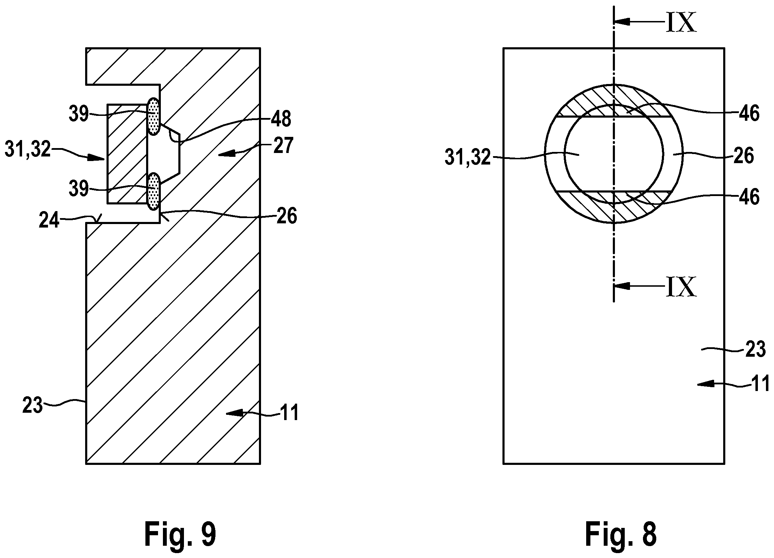

In den Fig. 8 und 9 ist eine gegenüber den Fig. 6 und 7 modifizierte Anordnung dargestellt, bei der anstatt zweier Erhebungen 44, 45 am Grund 26 der Vertiefung 24 eine Ausnehmung 48 ausgebildet ist. Die Ausnehmung 48, welche insbesondere länglich bzw. streifenförmig ausgebildet ist, ist in den Bereichen des Sensorelements 32 bzw. in Überdeckung mit den Bereichen ausgebildet, in denen in dem Sensorelement 32 die höchsten Dehnungen bzw. Zugspannungen auftreten, d.h. entsprechend der Darstellung der Fig. 2 in den beiden Zonen 34 und 35, ggf. auch in den dritten Zonen 36. Die Verbindung des Sensorelements 32 mit dem ebenen Grund 26 über die Klebeverbindung 39 erfolgt daher in streifenförmigen Bereichen, die in Überdeckung mit den vierten Zonen 37 entsprechend der Darstellung der Fig. 2 angeordnet sind bzw. außerhalb der Ausnehmung 48.

Das Sensorelement 32 bzw. das Piezoelement 31 ist über eine lediglich in der Fig. 1 dargestellte Kabelverbindung 50 mit einer Auswerteeinrichtung verbunden, welcher jedoch ggf. auch direkt an dem Sensorelement 32 angeordnet sein kann. In dieser Auswerteeinrichtung ist üblicherweise ein Auswertealgorithmus hinterlegt, beispielsweise in Form eines Computerprogramms.

In Abhängigkeit des in der Versorgungsbohrung 19 bzw. dem Abzweig 28 herrschenden Kraftstoffdrucks wölbt sich der Verformungsbereich 27 im Bereich des Piezoelements 31 nach außen, wobei durch die zumindest im Wesentlichen als starr anzunehmende stoffschlüssige Verbindung 38 zwischen dem Verformungsbereich 27 und dem Piezoelement 31 in dem Piezoelement 31 in Abhängigkeit der Höhe der Dehnungen bzw. Zugspannungen in dem Verformungsbereich 27 elektrische Spannungen erzeugt werden, die mittelbar zur Bestimmung der Position der Düsennadel 16 dienen.

Insbesondere kann es vorgesehen sein, dass das Piezoelement 31 von der dargestellten Form abweicht, und anstelle einer Vertiefung 24 beispielsweise eine Abflachung an dem Injektorgehäuse 11 ausgebildet ist, in deren Bereich das Piezoelement 31 angeordnet ist.

## Patentansprüche

1. Kraftstoffinjektor (10), insbesondere Common-Rail-Injektor, mit einem Injektorgehäuse (11), in dem ein Hochdruckraum (15) ausgebildet ist, der über eine im Injektorgehäuse (11) angeordnete Versorgungsbohrung (19) mit unter Druck stehendem Kraftstoff versorgbar ist, mit wenigstens einer zumindest mittelbar mit dem Hochdruckraum (15) verbundenen, im Injektorgehäuse (11) ausgebildeten Einspritzöffnung (12) zum Einspritzen von Kraftstoff in den Brennraum einer Brennkraftmaschine, mit einem die wenigstens eine Einspritzöffnung (12) freigebenden oder verschließenden Einspritzglied (16), und mit einer Messeinrichtung (30) zur zumindest mittelbaren Erfassung des Drucks im Hochdruckraum (15) oder der Versorgungsbohrung (19), wobei die Messeinrichtung (30) dazu ausgebildet ist, eine elastische Verformung eines zumindest mittelbar mit der Versorgungsbohrung (19) oder dem Hochdruckraum (15) in Wirkverbindung angeordneten Verformungsbereichs (27) zu erfassen, wobei die Messeinrichtung (30) ein Sensorelement (32) aufweist, das auf der dem Verformungsbereich (27) zugewandten Seite mit dem Verformungsbereich (27) über eine stoffschlüssige Verbindung (38) verbunden ist, und wobei das Sensorelement (32) dazu ausgebildet ist, in dem Verformungsbereich (27) bei einer Deformation auftretende Spannungen, insbesondere Zugspannungen, zu erfassen,
**dadurch gekennzeichnet,**
**dass** die stoffschlüssige Verbindung (38) lediglich in einem Teilbereich (42; 46) zwischen dem Verformungsbereich (27) und der dem Verformungsbereich (27) zugewandten Fläche des Sensorelements (32) ausgebildet ist.

2. Kraftstoffinjektor nach Anspruch 1,
**dadurch gekennzeichnet,**
**dass** der Teilbereich (42) wenigstens eine Zone (34, 35) umfasst, in der bei einer Verformung des Verformungsbereichs (27) in dem Sensorelement (32) die größten Spannungen auftreten.

3. Kraftstoffinjektor nach Anspruch 1,
**dadurch gekennzeichnet,**
**dass** der Teilbereich (46) wenigstens zwei Zonen (37) umfasst, die beidseitig wenigstens einer Zone (34 bis 36) des Sensorelements (32) angeordnet sind, in der bei einer Verformung des Verformungsbereichs (27) in dem Sensorelement (32) größere Spannungen auftreten als in dem Teilbereich (46).

4. Kraftstoffinjektor nach Anspruch 2 oder 3,
**dadurch gekennzeichnet,**
**dass** der Teilbereich (42; 46) zumindest im Wesentlichen streifenförmig ausgebildet ist.

5. Kraftstoffinjektor nach einem der Ansprüche 1 bis 4,
**dadurch gekennzeichnet,**
**dass** das Sensorelement (32) als Piezoelement (31) ausgebildet ist.

6. Kraftstoffinjektor nach einem der Ansprüche 1 bis 5,
**dadurch gekennzeichnet,**
**dass** das Sensorelement (32) auf der dem Verformungsbereich (27) zugewandten Seite und der Verformungsbereich (27) zumindest in dem Teilbereich (42; 46) eben ausgebildet sind.

7. Kraftstoffinjektor nach einem der Ansprüche 1 bis 6,
**dadurch gekennzeichnet,**
**dass** die stoffschlüssige Verbindung (38) als Klebeverbindung (39) ausgebildet ist.

8. Kraftstoffinjektor nach einem der Ansprüche 1 bis 7,
**dadurch gekennzeichnet,**
**dass** im Überdeckungsbereich zwischen dem Sensorelement (32) und dem Verformungsbereich (27) der Verformungsbereich (27) wenigstens eine Erhebung (41; 44, 45) und/oder wenigstens eine Ausnehmung (48) aufweist, und dass die stoffschlüssige Verbindung (38) im Bereich der wenigstens einen Erhebung (41; 44, 45) und/oder außerhalb der wenigstens einen Ausnehmung (48) ausgebildet ist.

9. Kraftstoffinjektor nach einem der Ansprüche 1 bis 8,
**dadurch gekennzeichnet,**
**dass** der Verformungsbereich (27) im Bereich der Versorgungsbohrung (19) oder eines mit der Versorgungsbohrung (19) in Wirkverbindung angeordneten Abzweigs (28) angeordnet ist.

10. Kraftstoffinjektor nach einem der Ansprüche 1 bis 9,
**dadurch gekennzeichnet,**
**dass** der Verformungsbereich (19) im Bereich einer sacklochförmigen Vertiefung (24) oder einer Abflachung des Injektorgehäuses (11) angeordnet ist.

## Claims

1. Fuel injector (10), in particular common-rail injector, having an injector housing (11) in which there is formed a high-pressure chamber (15) which can be supplied with pressurized fuel via a supply bore (19) arranged in the injector housing (11), having at least one injection opening (12) which is connected at least indirectly to the high-pressure chamber (15) and which is formed in the injector housing (11) and which serves for the injection of fuel into the combustion chamber of an internal combustion engine, having an injection valve element (16) which opens up or closes off the at least one injection opening (12), and having a measuring device (30) for at least indirectly detecting the pressure in the high-pressure chamber (15) or in the supply bore (19), wherein the measuring device (30) is designed to detect an elastic deformation of a deformation region (27) which is arranged so as to be at least indirectly operatively connected to the supply bore (19) or to the high-pressure chamber (15), wherein the measuring device (30) has a sensor element (32) which, on the side facing toward the deformation region (27), is connected to the deformation region (27) by means of a cohesive connection (38), and wherein the sensor element (32) is designed to detect stresses, in particular tensile stresses, occurring in the deformation region (27) during a deformation,
**characterized**
**in that** the cohesive connection (38) is formed only in a partial region (42; 46) between the deformation region (27) and that surface of the sensor element (32) which faces towards the deformation region (27).

2. Fuel injector according to Claim 1,
**characterized**
**in that** the partial region (42) comprises at least one zone (34, 35) in which the greatest stresses arise in the sensor element (32) during a deformation of the deformation region (27).

3. Fuel injector according to Claim 1,
**characterized**
**in that** the partial region (46) comprises at least two zones (37) which are arranged to both sides of at least one zone (34 to 36) of the sensor element (32) in which greater stresses arise in the sensor element (32) during a deformation of the deformation region (27) than in the partial region (46).

4. Fuel injector according to Claim 2 or 3,
**characterized**
**in that** the partial region (42; 46) is at least substantially of strip-like form.

5. Fuel injector according to one of Claims 1 to 4,
**characterized**
**in that** the sensor element (32) is formed as a piezo element (31).

6. Fuel injector according to one of Claims 1 to 5,
**characterized**
**in that** the sensor element (32) is of planar form on the side facing toward the deformation region (27), and the deformation region (27) is of planar form at least in the partial region (42; 46).

7. Fuel injector according to one of Claims 1 to 6,
**characterized**
**in that** the cohesive connection (38) is formed as an adhesive connection (39).

8. Fuel injector according to one of Claims 1 to 7,
**characterized**
**in that**, in the region of overlap between the sensor element (32) and the deformation region (27), the deformation region (27) has at least one elevation (41; 44, 45) and/or at least one recess (48), and in that the cohesive connection (38) is formed in the region of the at least one elevation (41; 44, 45) and/or outside the at least one recess (48).

9. Fuel injector according to one of Claims 1 to 8,
**characterized**
**in that** the deformation region (27) is arranged in the region of the supply bore (19) or of a branch (28) which is arranged so as to be operatively connected to the supply bore (19).

10. Fuel injector according to one of Claims 1 to 9,
**characterized**
**in that** the deformation region (19) is arranged in the region of a blind-bore-like depression (24) or of a flattened portion of the injector housing (11).

## Revendications

1. Injecteur de carburant (10), en particulier injecteur à rail commun, présentant
un boîtier d'injecteur (11) dans lequel est formée une chambre (15) sous haute pression qui peut être alimentée par l'intermédiaire d'un alésage d'alimentation (19) disposé dans le boîtier d'injecteur (11) en un carburant mis sous pression,
au moins une ouverture d'injection (12) reliée au moins indirectement à la chambre (15) sous haute pression et formée dans le boîtier d'injecteur (11) pour injecter du carburant dans la chambre de combustion d'un moteur à combustion interne,
un organe d'injection (16) qui libère ou ferme la ou les ouvertures d'injection (12) et
un dispositif de mesure (30) configuré pour saisir au moins indirection la pression qui règne dans la chambre (15) sous haute pression ou dans l'alésage d'alimentation (19),
le dispositif de mesure (30) étant configuré pour saisir une déformation élastique d'une partie déformable (27) interagissant au moins indirectement avec l'alésage d'alimentation (19) ou la chambre (15) sous haute pression,
le dispositif de mesure (30) présentant un élément de capteur (32) relié sur son côté tourné vers la partie déformable (27) à la partie déformable (27) par l'intermédiaire d'une liaison (38) en correspondance de matière et
l'élément de capteur (32) étant configuré pour détecter les contraintes, en particulier les contraintes de traction, qui surviennent dans la partie déformable (27) en cas de déformation,
**caractérisé en ce que**
la liaison (38) en correspondance de matière est formée uniquement dans une partie (42; 46) située entre la partie déformable (27) et la surface de l'élément de capteur (32) tournée vers la partie déformable (27).

2. Injecteur de carburant selon la revendication 1, **caractérisé en ce que** la partie (42) comporte au moins une zone (34, 35) dans laquelle les plus grandes contraintes apparaissent dans l'élément de capteur (32) en cas de déformation de la partie déformable (27).

3. Injecteur de carburant selon la revendication 1, **caractérisé en ce que** la partie (46) comporte au moins deux zones (37) disposées des deux côtés d'au moins une zone (34 à 36) de l'élément de capteur (32) et dans laquelle les contraintes qui surviennent dans l'élément de capteur (32) en cas de déformation de la partie déformable (27) sont plus élevées que dans la partie (46).

4. Injecteur de carburant selon les revendications 2 ou 3, **caractérisé en ce que** la partie (42; 46) est configurée au moins essentiellement en forme de ruban.

5. Injecteur de carburant selon l'une des revendications 1 à 4, **caractérisé en ce que** l'élément de capteur (32) est configuré comme piézo-élément (31).

6. Injecteur de carburant selon l'une des revendications 1 à 5, **caractérisé en ce que** sur son côté tourné vers la partie déformable (27), l'élément de capteur (32) est plan, de même que la partie déformable (27) au moins dans la partie (42; 46).

7. Injecteur de carburant selon l'une des revendications 1 à 6, **caractérisé en ce que** la liaison (38) en correspondance de matière est configurée comme liaison collée (39).

8. Injecteur de carburant selon l'une des revendications 1 à 7, **caractérisé en ce que** dans la partie où l'élément de capteur (32) et la partie déformable (27) se superposent, la partie déformable (27) présente au moins un rehaussement (41; 44, 45) et/ou au moins une découpe (48) et **en ce que** la liaison (38) en correspondance de matière est formée au niveau du ou des rehaussements (41; 44, 45) et/ou à l'extérieur de la ou des découpes (48).

9. Injecteur de carburant selon l'une des revendications 1 à 8, **caractérisé en ce que** la partie déformable (27) est disposée au niveau de l'alésage d'alimentation (49) ou d'une dérivation (28) disposée en relation fonctionnelle avec l'alésage d'alimentation (19).

10. Injecteur de carburant selon l'une des revendications 1 à 9, **caractérisé en ce que** la partie déformable (19) est disposée au niveau d'un creux (24) en forme de trou aveugle ou d'un aplatissement du boîtier d'injecteur (11).
